# DEMANDE DE BREVET EUROPEEN

(11) **EP 0 668 672 A1**
(43) Date de publication de la demande: **23.08.1995**
(21) Numéro de dépôt: 95400319.0
(22) Date de dépôt: 15.02.1995
(51) Int. Cl.: H04B 10/135

(54) **Système de communication optique à brouilleur de polarisation**

(30) Priorité: 18.02.1994 FR 9401894
(71) Demandeur: ALCATEL SUBMARCOM, F-92110 Clichy (FR)
(72) Inventeur: Letellier, Vincent, F-35310 Chavagne (FR); Bourret, Gérard, F-91620 La Ville du Bois (FR); Vidal, Dominique, F-92160 Antony (FR)
(74) Mandataire: Bourely, Paul

(57) **Abrégé**

Le brouilleur de polarisation de ce système reçoit une onde modulée en amplitude (WP). Il comporte un polariseur (34) et un modulateur de phase électro-optique (26) biréfringent. La tension d'une source d'excitation (36) commande ce modulateur. Elle varie d'une manière récurrente propre à imposer un balayage angulaire sur la sphère de Poincaré à la polarisation de l'onde (WE) sortant de ce modulateur. Cette onde est transmise par une ligne à fibres optiques (12) incluant des amplificateurs (20). Les temps de saturation de ces derniers sont inférieurs à la période de récurrence de cette tension ce qui limite leur gain différentiel.

## Description

La présente invention concerne de manière générale les systèmes de communication optiques, notamment ceux dans lesquels la lisibilité d'un signal fourni en sortie du système est affectée de manière défavorable par un phénomène lié au degré de polarisation présenté par une onde optique qui a porté ce signal au sein de ce système. Plus généralement elle concerne ceux de ces systèmes dans lesquels un inconvénient peut apparaître en liaison avec un degré de polarisation d'une onde optique transmise par ce système.

Le degré de polarisation est une grandeur considérée classiquement en science physique et définie en moyenne sur une période temporelle. Il est par exemple égal à 100% lorsqu'une onde reste polarisée linéairement selon une direction invariable sur cette période, ou lorsque une telle onde reste complètement polarisée circulairement dans un même sens durant cette pédiode. Il peut être nul ou prendre des valeurs intermédiaires si la polarisation varie au cours de cette période.

Il est par ailleurs connu que la polarisation d'une onde peut être caractérisée par la position d'un point représentatif sur une sphère dite sphère de Poincaré.

Cette invention s'applique typiquement lorsque une onde porteuse polarisée de façon rectiligne ou fortement elliptique interagit avec des centres actifs anisotropes d'un milieu amplificateur. De tels centres sont typiquement constitués par des ions erbium Er3+. Ils sont excités par une onde de pompage optique pour faire apparaître et maintenir un gain optique afin de compenser des pertes que l'onde porteuse subit en ligne. Ces centres sont typiquement dispersés dans une matrice de verre d'une manière aléatoire en ce qui concerne leurs orientations. Leur anisotropie est telle que chacun d'eux interagit principalement avec les ondes qui sont polarisées selon une direction de l'espace définie par l'orientation de ce centre. Cette direction peut être appelée "direction principale d'amplification" de ce centre.

Les conséquences de cette anisotropie des centres actifs du milieu amplificateur vont maintenant être décrites d'une manière simplifiée en considérant seulement deux populations homogènes quant à leurs directions principales d'amplification. Ces directions principales d'amplification seront de plus considérées dans un but de simplification comme étant totalement sélectives c'est-à-dire qu'une onde lumineuse n'interagirait avec une telle population que dans la mesure où cette onde présenterait une composante polarisée selon la direction principale d'amplification de cette population.

La direction principale d'amplification de la première population est celle de la polarisation de l'onde porteuse. La direction principale de polarisation de la seconde population est orthogonale à celle de la première population. Il résulte du phénomène d'amplification que cette première population est fortement désexcitée, ce qui limite le gain appliqué à l'onde porteuse et donc au signal. La partie du bruit dont la polarisation est orthogonale à celle de l'onde porteuse est amplifiée avec un gain plus élevé par la seconde population du moins tant que sa puissance reste inférieure à celle de l'onde porteuse combinée avec le bruit éventuel présentant la même polarisation que cette onde. Un gain différentiel apparaît ainsi. Il provoque, tout au long d'une ligne comportant une succession de tels amplificateurs, une diminution progressive et dommageable du rapport signal sur bruit. C'est pourquoi il a été proposé d'utiliser un brouilleur de polarisation pour moduler la polarisation de l'onde porteuse de manière que, dans chaque amplificateur, le signal soit amplifié aussi bien par la première que par la seconde des deux populations de centres actifs mentionnées ci-dessus.

Un tel brouilleur est connu par un article "Observation of new polarisation dependence effect in long haul optically amplified system" M.G. Taylor. OFC/IOOC'93 Post deadline paper, PD5, pp 25-28. Ce brouilleur connu utilise un modulateur acousto-optique et fonctionne à une fréquence de 85 MHz. Sa mise en oeuvre est délicate.

La présente invention a pour but de permettre une mise en oeuvre simple d'un brouilleur de polarisation efficace.

Dans ce but elle a pour objet un système de communication optique à brouilleur de polarisation, le brouilleur de ce système comportant un modulateur de phase électro-optique imposant une variation récurrente de phase à une onde optique portant un signal à transmettre, ce système étant caractérisé par le fait que ledit modulateur de phase est birefringent, deux axes propres de ce modulateur étant inclinés par rapport à une polarisation présentée par ladite onde optique en entrée de ce modulateur de manière que ladite variation récurrente de phase entraîne une variation récurrente d'une polarisation présentée par cette onde en sortie de ce modulateur.

Cette dernière variation impose au point représentatif de cette polarisation de parcourir un arc sur la sphère de Poincaré. Elle est telle que le degré de polarisation de cette onde soit diminué de façon significative sur la période de récurrence.

A l'aide des figures schématiques ci-jointes, on va décrire plus particulièrement ci-après à titre d'exemple non limitatif, comment la présente invention peut être mise en oeuvre. Lorsqu'un même élément est représenté sur plusieurs figures il y est désigné par le même signe de référence.

La figure 1 représente une vue d'ensemble d'un système de communication optique à brouilleur de polarisation selon la présente invention.

La figure 2 représente une vue du brouilleur de polarisation du système de la figure 1.

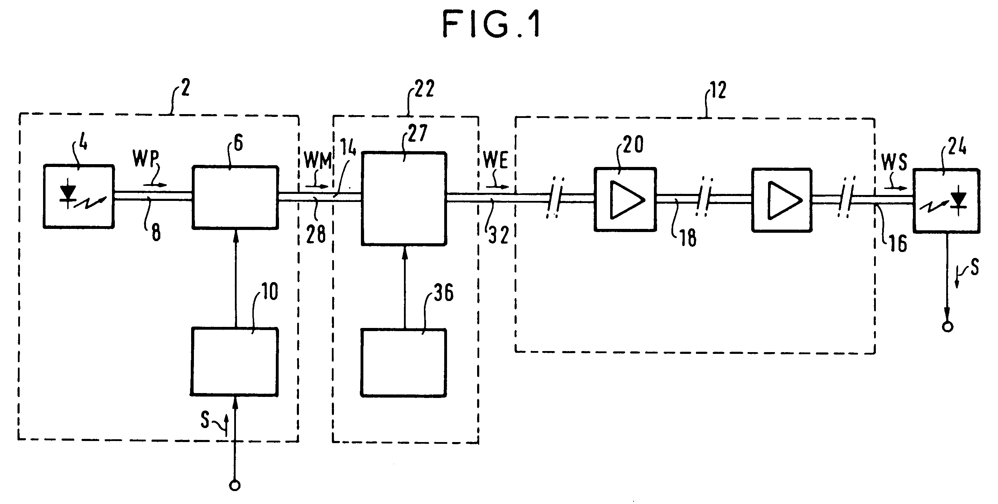

Conformément à la figure 1 le système de communication donné en exemple comporte divers éléments connus en eux-mêmes:

Il s'agit d'abord d'un ensemble d'émission 2. Cet ensemble reçoit un signal a transmettre S. Il émet en réponse une onde modulée primaire WM de nature optique portant ce signal sous la forme d'une modulation d'un des paramètres de cette onde. Ce paramètre sera appelé ci-après "paramètre porteur". Il est typiquement constitué par l'amplitude, la fréquence ou la phase de l'onde WM.

L'ensemble d'émission 2 comporte par exemple un émetteur laser à semi-conducteur à fréquence fixe 4 injectant une onde porteuse WP à une longueur d'onde de 1550 nm dans une fibre optique 8. Cette dernière est de préférence une fibre optique à maintien de polarisation. Un modulateur d'amplitude 6 est raccordé à cet émetteur par la fibre optique 8. Le modulateur d'amplitude 6 est commandé par un circuit électrique de commande 10 recevant le signal S. Le paramètre porteur est dans cet exemple l'amplitude de l'onde fournie en sortie du modulateur d'amplitude 6.

L'onde modulée WM présente une polarisation sensiblement constante. L'existence de cette polarisation résulte par exemple du fait que cette onde a été polarisée de façon rectiligne par l'émetteur 4.

Le système comporte ensuite de manière connue une voie optique présentant une entrée 14 et incluant à la fois un brouilleur de polarisation 22, qui sera décrit plus loin, et une ligne de transmission 12. Cette ligne reçoit une onde d'entrée de ligne WE de nature optique qui est formée par le brouilleur 22 à partir de l'onde WM. Elle présente une sortie 16 qui constitue en même temps une sortie de la voie optique et qui restitue en réponse une onde de sortie de ligne WS portant ce signal. Elle est typiquement constituée de fibres optiques telles que 18.

De manière générale la présente invention trouve avantageusement application lorsque certains organes inclus dans cette ligne sont sensibles à un degré de polarisation des ondes qu'ils transmettent et lorsqu'en même temps ces organes font apparaître un inconvénient qui résulte de cette sensibilité d'une manière dépendant de temps caractéristiques de ces organes. Plus précisément cette sensibilité est telle que, si l'onde d'entrée de ligne avait un degré de polarisation non nul sur un laps de temps voisin ou supérieur à ce temps caractéristique, ce degré de polarisation entraînerait un inconvénient dont l'importance croîtrait avec ce degré. Cet inconvénient peut affecter par exemple le rapport signal sur bruit de l'onde optique de sortie de ligne.

Plus particulièrement la ligne 12 présente par exemple une longueur de plusieurs milliers de kilomètres. Elle comporte alors typiquement des amplificateurs tels que 20 répartis sur sa longueur est constitués de fibres optiques dopées avec des ions erbium pompés optiquement. Ces amplificateurs constituent alors, tant par émission spontanée de bruit que par amplification d'un bruit préexistant, des générateurs de bruit pouvant faire apparaître un gain diffèrentiel conformément au phénomène précédemment décrit. Ils peuvent entraîner ainsi un inconvénient constitué par une diminution induite du rapport signal sur bruit de l'onde de sortie de ligne. Ils constituent donc des organes sensibles au degré de polarisation tels que précédemment mentionnés. Leur temps caractéristique est sensiblement le temps de saturation de leur gain.

Le brouilleur de polarisation 22 est prévu pour éviter ou limiter ce gain différentiel. Il reçoit en entrée l'onde modulée primaire WM. Il restitue en sortie l'onde WE tout en modifiant la polarisation de l'onde qui le traverse. Cette modification est faite à une fréquence de brouillage dont l'inverse constitue une période de brouillage, cette période étant choisie inférieure audit temps caractéristique. Elle est prévue pour diminuer le degré de polarisation de cette onde sur cette période de brouillage. Elle impose ainsi au moins une limitation à la diminution induite du rappport signal sur bruit de l'onde de sortie de ligne.

Enfin le récepteur 24 reçoit l'onde de sortie de ligne WS pour restituer le signal S.

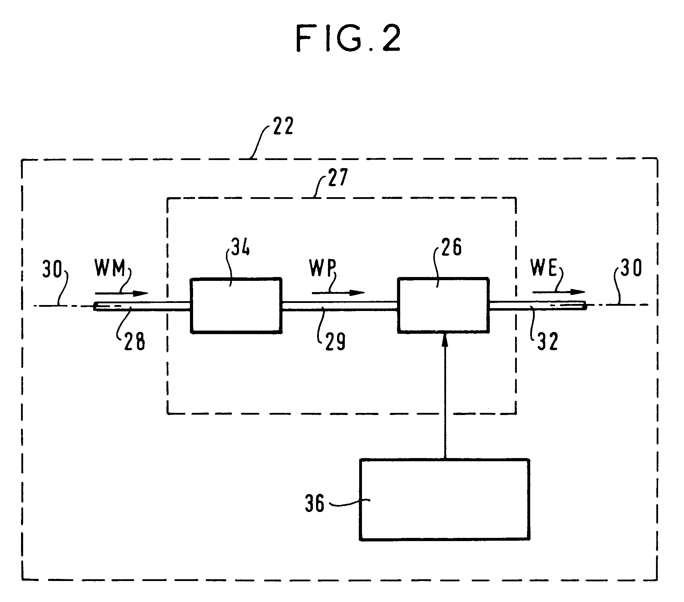

Conformément à la présente invention et à la figure 2, le brouilleur de polarisation comporte les éléments suivants:
- Un polariseur 34. Ce polariseur reçoit l'onde modulée primaire WM par une fibre optique 28 qui est de préférence une fibre optique à maintien de polarisation. Il en restitue la lumière sous la forme d'une onde WP. L'onde s'y propage selon l'axe de propagation de la lumière 30. Il a de préférence un fort taux de polarisation. Il pourrait être appliqué directement sur le modulateur de phase mentionné ci-après. Il pourrait aussi dans certains cas être omis.
- Un modulateur de phase 26. Cet élément reçoit l'onde modulée primaire WP par une fibre optique 29 qui est de préférence à maintien de polarisation. Il en restitue la lumière sous la forme de l'onde d'entré de ligne WE qui est reçue par une autre fibre optique 32. L'onde s'y propage selon l'axe de propagation de la lumière 30. Il est constitué d'un guide formé dans un cristal de niobate de lithium. Les axes propres de ce cristal sont orientés de préférence à 45° des axes propres de la fibre optique à maintien de polarisation 29. La coupe du cristal de niobate de lithium peut être, selon une première solution, une coupe x ou y avec propagation suivant l'axe z. Cette solution peut être choisie pour diminuer la dispersion modale de polarisation du modulateur de phase. Selon une deuxième solution on choisit une coupe z avec propagation suivant l'axe x ou y. Cette solution peut être choisie pour diminuer la tension de commande du modulateur de phase.
- Enfin une source d'excitation 36 appliquant une tension d'excitation au modulateur de phase 26. Cette source fait varier la tension d'excitation de manière sensiblement périodique avec une fréquence constituant ladite fréquence de brouillage. Cette fréquence de brouillage doit être au moins voisine et de préférence supérieure à l'inverse du temps caractéristique des amplificateurs. Elle est typiquement supérieure à 100 Hz.

La tension d'excitation du modulateur 26 induit une différence entre les longueurs des chemins optiques vus par deux vibrations lumineuses orientées respectivement selon les deux axes propres de ce modulateur. Cette différence se traduit par un balayage angulaire de la polarisation de l'onde qui traverse ce modulateur. L'amplitude de ce balayage croit avec l'amplitude de la tension d'excitation.

L'amplitude de la variation périodique de la tension d'excitation est choisie pour imposer une amplitude de balayage prédéterminée à la polarisation de l'onde au cours de chaque période de brouillage. Cette amplitude est choisie suffisante pour assurer la limitation souhaitée ou l'annulation du degré de polarisation de l'onde d'entrée de ligne WE et par là même la limitation ou la suppression de la diminution induite du rapport signal sur bruit. Le degré de polarisation est typiquement choisi inférieur à 30%.

La loi de variation de cette tension est avantageusement choisie triangulaire pour imposer une vitesse de balayage angulaire sensiblement constante.

## Revendications

**1)** Système de communication optique à brouilleur de polarisation, le brouilleur de ce système comportant un modulateur de phase (26) électro-optique imposant une variation récurrente de phase à une onde optique (WE) portant un signal à transmettre (S), ce système étant caractérisé par le fait que ledit modulateur de phase est birefringent, deux axes propres de ce modulateur étant inclinés par rapport à une polarisation présentée par ladite onde optique en entrée de ce modulateur de manière que ladite variation récurrente de phase entraîne une variation récurrente d'une polarisation présentée par cette onde en sortie de ce modulateur.

**2)** Système de communication optique à brouilleur de polarisation, ce système comportant :
- un ensemble d'émission (2) recevant un signal à transmetttre (S) et émettant en réponse une onde optique constituant une onde modulée primaire (WM) et portant ce signal sous la forme d'une modulation d'un paramètre de cette onde de sorte que ce paramètre constitue un paramètre porteur, cette onde modulée primaire (WM) présentant une polarisation,
- une voie optique (22, 12) présentant une entrée (14) recevant ladite onde modulée primaire (WM), cette voie présentant aussi une sortie (16) restituant en réponse une onde de sortie (WS) portant ledit signal, au moins un organe (20) inclus en série dans cette voie étant sensible à un degré de polarisation d'une onde qu'il reçoit et qui constitue une onde d'entrée de cet organe, cet organe ayant un temps caractéristique et pouvant faire apparaître un inconvénient dont l'importance croît avec un degré de polarisation présenté par cette onde d'entrée d'organe sensible sur une période de durée égale à ce temps caractéristique,
- un brouilleur de polarisation (22) inclus en série sur cette voie en amont dudit organe sensible, ce brouilleur faisant varier la polarisation de l'onde qui le traverse de manière à faire varier aussi la polarisation de ladite onde d'entrée d'organe sensible, cette variation étant réalisée au cours dudit temps caractéristique pour au moins limiter ledit inconvénient,
- et un récepteur (24) recevant ladite onde de sortie (WS) pour restituer ledit signal (S),
ce système étant caractérisé par le fait que ledit brouilleur de polarisation comporte:
- un modulateur de phase électro-optique (26) recevant l'onde modulée primaire (WP) sous une forme polarisée, ce modulateur ayant deux axes propres inclinés par rapport à la polarisation de cette onde, de manière à introduire un déphasage entre deux vibrations lumineuses parallèles à ces deux axes propres et se propageant dans ce modulateur, ce déphasage étant comamandé par une tension d'excitation appliquée à ce modulateur, l'ensemble de ces deux vibrations formant ladite onde d'entrée de ligne (WE) en sortie de ce modulateur,
- et une source d'excitation (36) fournissant ladite tension d'excitation et la faisant varier d'une manière récurrente propre à imposer un balayage angulaire à la polarisation de l'onde d'entrée de ligne (WE), cette variation étant réalisée avec des temps de récurrence non sensiblement supérieurs audit temps caractéristique et avec une amplitude suffisante pour limiter ledit inconvénient.

**3)** Système selon la revendication 2 caractérisé par le fait que ledit brouilleur de polarisation comporte en outre un polariseur (34) placé en entrée dudit modulateur de phase (26) et présentant un axe de transmission orienté sensiblement à 45 degrés par rapport aux axes propres de ce modulateur.

**4)** Système selon la revendication 2 caractérisé par le fait que ladite voie optique (22, 12) comporte une ligne de transmission à fibres optiques (12) incluant une succession d'amplificateurs à fibres optiques (20) ayant des temps de saturation respectifs, chacun de ces amplificateurs constituant un dit organe sensible et engendrant un bruit, ledit temps caractéristique de cet organe étant constitué par le temps de saturation de cet amplificateur, ledit inconvénient étant constitué par une diminution induite du rapport signal sur bruit en sortie de ladite ligne.

**5)** Système selon la revendication 4 caractérisé par le fait que ladite source d'excitation (36) est une source de tension périodique dont la fréquence constitue une fréquence de brouillage et est supérieure à 100 Hz.

**6)** Système selon la revendication 5, caractérisé par le fait que ladite tension périodique varie en forme de signal triangulaire.
